# EUROPÄISCHE PATENTSCHRIFT

(11) **EP 1 308 705 B1**
(45) Veröffentlichungstag und Bekanntmachung des Hinweises auf die Patenterteilung: **02.05.2007**
(21) Anmeldenummer: 02022401.0
(22) Anmeldetag: 04.10.2002
(51) Int. Cl.: G01L 1/22

(54) **Verfahren zur Herstellung eines Sensorelementes und dessen Verwendung**
Manufacturing procedure of a sensor element and use of such an element
Procédé de fabrication d'un élément capteur et son utilisation

(30) Priorität: 27.10.2001 DE 10153208
(43) Veröffentlichungstag der Anmeldung: 07.05.2003
(73) Patentinhaber: ROBERT BOSCH GMBH, 70442 Stuttgart (DE)
(72) Erfinder: Voigtlaender, Klaus, 73117 Wangen (DE); Treutler, Christoph, 72827 Wannweil (DE); Schmidt, Ralf, 70839 Gerlingen (DE); Hasenkox, Ulrich, 71254 Ditzingen (DE); Acker, Thilo, 71116 Gaertringen (DE); Heyers, Klaus, 72766 Reutlingen (DE)

(56) Entgegenhaltungen:
- DE-A- 3 804 483
- GB-A- 2 304 812
- GB-A- 2 330 451

## Beschreibung

Die Erfindung betrifft ein Verfahren zur Herstellung eines Sensorelementes, insbesondere eines Sensorelementes mit einem Dehnungsmessstreifen zur Erfassung von physikalischen Größen wie Kraft, Moment oder Druck, sowie dessen Verwendung, insbesondere in Kraftfahrzeugen, gemäß dem Anspruch 1.

### Stand der Technik

Dehnungsmessstreifen sind im Stand der Technik vielfach bekannt und dienen insbesondere zur Erfassung von Verformungen an Körpern bzw. zur Messung von physikalischen Größen wie Kraft, Moment und Druck. Zur Herstellung von Dehnungsmessstreifen auf einem Substrat werden einerseits an die Halbleitertechnologie angelehnte Abscheideverfahren eingesetzt, um diese so beispielsweise auf einer Stahlmembran in Form eines Hochdrucksensors zu applizieren. In anderen Anwendungen werden Dehnungsmessstreifen als bereits fertige Einheit durch geeignete Verbindungstechniken wie Kleben oder Schweißen auf die zu analysierende Substratoberfläche fixiert.

Problematisch bei diesen Verfahren ist stets das Aufbringen der Dehnungsmessstreifen auf unebenen Flächen, da im Fall der halbleitertechnologischen Prozesse eine hinreichend genaue Strukturdefinition auf unebenen Flächen nicht möglich ist, und in dem Fall der Fixierung der Dehnungsmessstreifen als fertige Einheit Probleme durch eine dabei vielfach unvermeidliche Stauchung des Dehnungsmessstreifenfilmes auftreten. Andererseits ist gerade das Vermessen von Verformungen an Bauteilen mit unebener Geometrie von großer technischer Bedeutung, beispielsweise die Messung von Drehmomenten an drehenden Teilen in Kraftfahrzeugen oder die Messung von Verformungen an Autotüren oder Autositzen.

GB 2 304 812 A offenbart eine Zündkerze mit Drucksensor und ein Verfahren zu deren Herstellung.

Aus dem Stand der Technik ist weiter auch das Aufbringen von Tinten, beispielsweise auf Papier, im Rahmen eines Ink-Jet-Verfahrens (Tintenspritzverfahren) bekannt, wie dies von und mit handelsüblichen Tintenstrahldruckern vielfach durchgeführt wird. Insbesondere werden bei diesem Verfahren mittels eines Piezoaktors oder eines Thermoaktors kleine Tropfen durch eine feine Düse gespritzt und auf einer Papierfläche definiert abgeschieden. Dabei ist es bereits mit handelsüblichen Druckern möglich, sehr feine Strukturen mit örtlich hoher Präzision und Reproduzierbarkeit zu erzeugen.

### Vorteile der Erfindung

Das erfindungsgemäße Verfahren zur Herstellung eines Sensorelementes hat gegenüber dem Stand der Technik den Vorteil, dass damit die für die Funktion des Sensorelementes erforderliche sensitive Schicht auf einer nahezu beliebig geformten Unterlage durch Tintenspritzen (Ink-Jet-Printing) aufgebracht werden kann, wobei unter einer Tinte im Rahmen der Erfindung auch eine Lösung oder Suspension verstanden wird. Das erfindungsgemäße Verfahren bietet dabei vor allem Vorteil einer kontaktlosen, lokal begrenzten und örtlich frei wählbaren Deposition einer Vielzahl von unterschiedlichen Materialien.

Insbesondere können durch das eingesetzte Ink-Jet-Verfahren aufgrund der damit möglichen, lateral sehr genauen Strukturdefinition auf unterschiedlichsten Untergründen Widerstandsbahnen für Dehnungsmessstreifen in weitgehend beliebiger, beispielsweise mäanderförmiger Form, aufgebracht werden.

Daneben entfällt im Fall des erfindungsgemäßen Verfahrens vorteilhaft die ansonsten übliche Fixierung beispielsweise eines auf einer Folie hergestellten Dehnungsmessstreifens auf dem zu analysierenden Bauteil bzw. Substrat, und die dabei vielfach auftretende Deformation dieser Folie im Falle einer unebenen Oberfläche des Substrats, sowie auch das teilweise dazu erforderliche Aufbringen einer Klebeschicht mit definierter Dicke und reproduzierbaren mechanischen Eigenschaften. Im Übrigen wird durch den Verzicht auf eine Klebeschicht auch eine Steigerung der Empfindlichkeit des Sensorelementes erreicht.

Gegenüber direkt deponierenden Verfahren, die an die Halbleitertechnik angelehnt sind, hat das erfindungsgemäße Verfahren den Vorteil, dass keine ebenen und glatten Substrate erforderlich sind, und dass dabei auch größere Arbeitsabstände bzw. der Einsatz einer adaptiven Abstandsregelung, d.h. die Veränderung des Abstandes des eingesetzten Piezooder Thermoaktors zum Verspritzen der eingesetzten Tinte bzw. Suspension oder Lösung gegenüber dem Substrat als Funktion der Zeit beziehungsweise des Ortes, möglich sind.

Insgesamt eignet sich das erfindungsgemäße Verfahren besonders vorteilhaft zur Herstellung von Widerstandsleiterbahnen wie sie für Dehnungsmessstreifen erforderlich sind, mit einer typischen Breite im Mikrometerbereich, d.h. von 1 µm bis 1000 µm, insbesondere von 50 µm bis 500 µm, und einer Länge bis hin zu 10 cm, die von dem darunter befindlichen Substrat elektrisch über eine Isolationsschicht getrennt sind.

Daneben lassen sich mit Hilfe des erfindungsgemäßen Verfahrens dünne, lateral feinstrukturierte Schichten ohne Beschränkung des Materialsortiments auf das Portfolio der Halbleitertechnik erzeugen, so dass auch Dehnungsmessstreifen auf Substraten wie Keramikfolien, Polymerfolien, Stahl, auf unebenen Substraten, auf großen Substraten und an schwer zugänglichen Stellen in einfacher Weise herstellbar sind. Zudem entfallen auch ansonsten übliche Montagevorgänge zur Fixierung des Sensorelementes auf dem Substrat.

Vorteilhafte Weiterbildungen der Erfindung ergeben sich aus den in den Unteransprüchen genannten Maßnahmen.

So ist besonders vorteilhaft, wenn die sensitive Schicht des Sensorelementes möglichst weitgehend von der darunter befindlichen ersten Schicht und einer darüber befindlichen zweiten Schicht oder Passivierschicht umschlossen wird, um damit die Langzeitstabilität der sensitiven Schicht zu verbessern und sie vor Umwelteinflüssen und/oder der Eindiffusion von Fremdstoffen zu schützen.

Weiter ist vorteilhaft, wenn insbesondere unmittelbar nach dem Aufbringen der ersten Schicht eine Wärmebehandlung und/oder eine insbesondere einem Aushärten und/oder einer Vernetzung dienende Beaufschlagung mit elektromagnetischer Strahlung der ersten Schicht erfolgt. Bevorzugt wird eine Wärmebehandlung oder eine Beaufschlagung mit Laserlicht oder UV-Licht eingesetzt.

In diesem Zusammenhang ist zudem vorteilhaft, wenn die zunächst aufgebrachte erste Schicht vor dem Aufbringen des nachfolgend aufgespritzten Materials der sensitiven Schicht auf möglichst hohe Temperaturen aufgeheizt wird, um sie so möglichst gut zu verdichten, und eine Vermischung mit dem nachfolgend aufgespritzten Material der sensitiven Schicht zu vermeiden. Andererseits sind durch die Auswahl des Materials des Substrates bzw. des Materials der ersten Schicht dieser Temperatur vielfach Grenzen gesetzt.

Als Temperaturen für diese Wärmebehandlung haben sich Temperaturen von 50°C bis 300°C, insbesondere von 100°C bis 250°C, als vorteilhaft herausgestellt.

Schließlich ist vorteilhaft, wenn die Wärmebehandlung bzw. die Beaufschlagung mit elektromagnetischer Strahlung so erfolgt, dass im Wesentlichen nur die jeweils gerade aufgebrachte Schicht aufgeheizt wird, und sich das darunter liegende Substrat möglichst wenig erwärmt.

Vorteilhaft ist weiterhin, wenn, insbesondere unmittelbar nach dem Aufbringen der sensitiven Schicht auf die vorzugsweise bereits der Wärmebehandlung bzw. dem Aushärten oder Vernetzen unterzogene erste Schicht auch eine Wärmebehandlung, insbesondere ein zumindest partielles Sintern, und/oder eine insbesondere einem Aushärten und/oder einer Vernetzung dienende Beaufschlagung mit elektromagnetischer Strahlung der sensitiven Schicht erfolgt, wobei auch in diesem Fall eine Wärmebehandlung oder eine Beaufschlagung mit Laserlicht bzw. eine UV-Bestrahlung bevorzugt ist.

Die im Rahmen der Wärmebehandlung und/oder Bestrahlung der sensitiven Schicht eingesetzten Temperaturen liegen vorteilhaft zwischen 80°C und 500°C, insbesondere zwischen 150°C bis 300°C, wobei auch hier die Wärmebehandlung bevorzugt so erfolgt, dass die darunter befindliche erste Schicht bzw. das unter dieser befindliche Substrat möglichst wenig aufgeheizt wird.

Bei der Erzeugung der zweiten, vor allem der Passivierung dienenden Schicht ist vorteilhaft, wenn diese ebenfalls, insbesondere unmittelbar nach dem Aufbringen, einer Wärmebehandlung und/oder einem Aushärten oder einer Vernetzung dienenden Beaufschlagung mit elektromagnetischer Strahlung unterzogen wird. Diese erfolgt bevorzugt so wie im Fall der ersten Schicht.

Als im Wesentlichen der elektrischen Isolation der darüber befindlichen sensitiven Schicht gegenüber dem Substrat dienende erste Schicht eignet sich vor allem elektrisch isolierende Schichten wie eine keramische Schicht, eine organische Schicht, beispielsweise wie eine Acrylat-Schicht, oder eine Ormocer-Schicht (Ormocer = "Organically Modified Ceramic"), die zunächst in Form einer Lösung oder Suspension auf das Substrat aufgespritzt worden ist, und die in einem zweiten Verfahrensschritt, beispielsweise durch Abziehen oder Verdampfen des Lösungsmittels und/oder eine wie vorstehend beschriebene Wärmebehandlung, in die erste Schicht überführt wird.

Als Material für die sensitive Schicht, insbesondere zur Herstellung eines Dehnungsmessstreifens, eignet sich vor allem eine metallische Schicht, insbesondere eine im Wesentlichen aus einem Edelmetall wie Gold oder Silber bestehende Schicht. Daneben hat sich auch eine mit leitfähigen Partikeln gefüllte Polymerschicht als vorteilhaft erwiesen.

### Zeichnungen

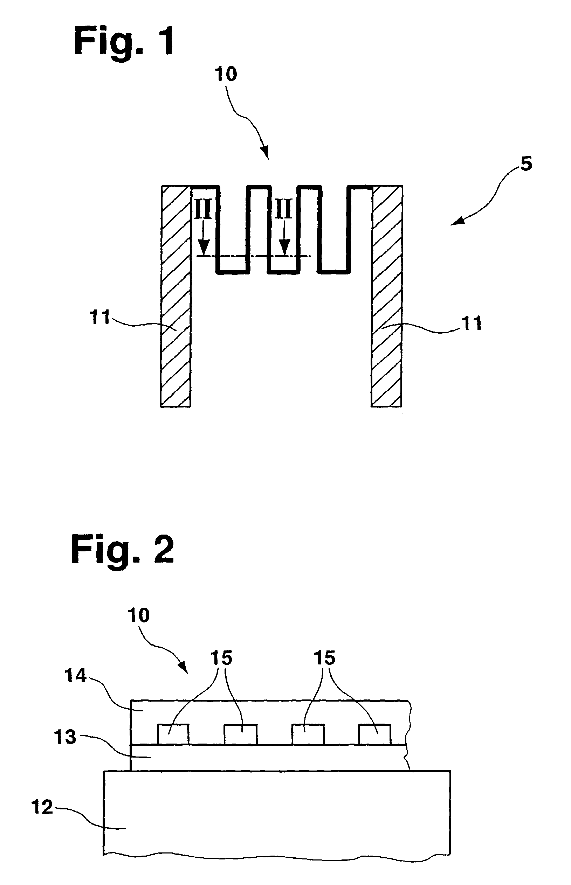

Die Erfindung wird anhand der Zeichnungen und in der nachfolgenden Beschreibung näher erläutert. Es zeigen Figur 1 eine Draufsicht auf ein Sensorelement in Form eines Dehnungsmessstreifens mit Kontaktflächen, und Figur 2 einen Schnitt durch Figur 1 entlang der eingezeichneten Schnittlinie.

### Ausführungsbeispiele

Die Erfindung benutzt zunächst ein übliches Ink-Jet-Verfahren mit dem eine Lösung oder eine Suspension mittels eines Piezoaktors oder eines Thermoaktors durch eine oder mehrere Düsen mit einer Öffnung mit einem typischen Durchmesser von 3 µm bis 100 µm, insbesondere von 5 µm bis 50 µm, auf ein Substrat aufgespritzt wird. Dabei können übliche Tintenstrahldrucker mit gegebenenfalls mehreren Druckköpfen eingesetzt werden, wobei in einen dieser Druckköpfe beispielsweise eine Lösung oder Suspension zur Erzeugung der ersten Schicht und in den anderen dieser Druckköpfe eine Lösung beziehungsweise Suspension zur Erzeugung der sensitiven Schicht eingefüllt ist.

Die gewünschte Abscheidung lateral exakt definierter Strukturen erfolgt in üblicher Weise rechnergesteuert durch eine x,y-Positionierung der Druckköpfe, wie es auch bei Bürodrukkern üblich ist. Zur Adaption an eine unebene Oberfläche des verwendeten Substrates kann weiter auch eine rechnergesteuerte Anpassung des Abstandes des oder der Druckköpfe von dem Substrat, d.h. eine variable z-Positionierung, vorgesehen sein.

In einem ersten Verfahrensschritt wird im Rahmen des erläuterten Ausführungsbeispiels auf ein Substrat 12, das beispielsweise aus Stahl besteht, bevorzugt flächig eine erste Schicht 13 als elektrische Isolationsschicht aufgespritzt. Diese besteht aus einem Ormocer oder einem Acrylat, das nach einer Wärmebehandlung und/oder einem durch elektromagnetische Strahlung induzierten Aushärten bzw. Vernetzen elektrisch isolierendes Verhalten zeigt.

Alternativ eignen sich als Ausgangsmaterial zum Erzeugen der ersten Schicht 13 auch übliche flüssige Precursormaterialien oder Suspensionen von Precursormaterialien, die durch eine Wärmebehandlung bzw. eine durch elektromagnetische Strahlung induzierte chemische Reaktion oder Vernetzung in ein beispielsweise keramisches Material wie Zirkoniumdioxid oder ein Nitrid überführbar sind.

Schließlich eignet sich als Ausgangsmaterial zur Herstellung der ersten Schicht 13 je nach Anwendung auch ein rein organisches Material, das nach dem Verspritzen im Rahmen des Ink-Jet-Verfahrens, gegebenenfalls einem Abziehen des Lösungsmittels und einer nachfolgenden Wärmebehandlung bzw. Vernetzung oder Verdichtung, als organische Schicht vorliegt.

Nach dem Erzeugen der ersten Schicht 13 auf dem Substrat 12 und deren nachfolgender Vernetzung bzw. Verdichtung, mit der auch ein Abziehen des Lösungsmittels oder eines flüssigen Anteils der Suspension einhergeht, wird anschließend die eigentliche sensitive Schicht 15 mit Hilfe des Ink-Jet-Verfahrens in strukturierter Form auf die erste Schicht 13 aufgebracht.

Wie in Figur 1 erkennbar, ist die als Dehnungsmessstreifen ausgeführte sensitive Schicht 15 im erläuterten Beispiel mäanderförmig strukturiert.

Als Ausgangsmaterial zur Herstellung der sensitiven Schicht 15 eignen sich Suspensionen mit metallischen Partikeln, insbesondere metallischen Nanopartikeln, wobei bevorzugt Metalle eingesetzt werden, die nicht zur Oxidation neigen. Besonders bevorzugt werden edle Metalle wie Gold oder Silber eingesetzt, die den Feststoffanteil der zur Herstellung der sensitiven Schicht 15 verspritzten Suspension bilden.

Die Verwendung sehr kleiner Teilchen im Nanometerbereich hat den Vorteil, dass diese bei vergleichsweise niedriger Temperatur bereits gesintert werden können, und die Oberfläche zur Bildung von insbesondere elektrischen Kontaktflächen sehr groß ist. Zudem ist deren Beweglichkeit bei einer Umordnung bzw. Verdichtung im Laufe der Wärmebehandlung sehr hoch.

Alternativ zur Verwendung von Suspensionen, bei der im Anschluss an das Aufspritzen im Rahmen des Ink-Jet-Verfahrens das eingesetzte Lösungsmittel bzw. die der Suspension zugesetzte Flüssigkeit verdampft wird und nur noch der Feststoffanteil zurückbleibt, ist es ebenso möglich, ein Ausgangsmaterial zur Herstellung der sensitiven Schicht 15 zu verspritzen, das in Form eines Polymergerüstes mit einem hohen Anteil von leitfähigen Partikeln, vorzugsweise im Nanometerbereich, vorliegt. Nach dem Aufspritzen eines solchen Ausgangsmaterials auf der ersten Schicht 13 in der gewünschten Struktur wird dieses dann beispielsweise gehärtet sowie gegebenenfalls einer Wärmebehandlung unterzogen, so dass sich daraus die sensitive Schicht 15 bildet.

Die Verwendung eines Polymergerüstes mit einem hohen Anteil von leitfähigen Partikeln für die sensitive Schicht 15 hat gegenüber einer Suspension den Vorteil, dass es nicht erforderlich ist, einen zusammenhängenden Materialverbund durch ein zumindest partielles Sintern im Rahmen der Wärmebehandlung der sensitiven Schicht 15 zu erwirken, und darüber eine ausreichende elektrische Leitfähigkeit sicherzustellen.

Nach dem Aufbringen der sensitiven Schicht 15 wird diese einer Wärmebehandlung oder einem Aushärten bzw. einer Vernetzung dienenden Beaufschlagung mit elektromagnetischer Strahlung unterzogen, bevor abschließend eine zweite Schicht 14 mit Hilfe des erläuterten Ink-Jet-Verfahrens aufgebracht wird.

Die zweite Schicht 14 wird bevorzugt so aufgebracht, dass die sensitive Schicht 15 von der ersten Schicht und der zweiten Schicht 14 zumindest nahezu vollständig umschlossen ist.

An das Aufbringen der zweiten Schicht 14 schließt sich dann erneut eine Wärmebehandlung und/oder ein Aushärten bzw. eine Vernetzung dieser Schicht analog der Behandlung der ersten Schicht 13 an.

Als Ausgangsmaterial für die zweite Schicht 14 eignet sich beispielsweise eine Suspension eines keramischen Materials wie einer nanoskaligen Nitridkeramik, oder auch ein flüssiges Precursormaterials zur Herstellung einer entsprechenden keramischen Schicht.

Zusammenfassend sieht das erläuterte Verfahren vor, eine Suspension oder eine geeignet modifizierte Flüssigkeit mit Hilfe eines Piezoaktors oder eines Thermoaktors durch eine Düse in Form von kleinen Tropfen, insbesondere mit Hilfe eines üblichen Druckkopfes für Tintenstrahldrucker, auf das Substrat 12 aufzuspritzen, wobei die Tropfen auf die zu beschichtende Oberfläche auftreffen, und sich dort zunächst entsprechend der Auftreffenergie und der Oberflächenenergie des Substrates 12 bzw. des Benetzungsverhaltens der aufgespritzten Substanzen verteilen. Anschließend erfolgt dann je nach eingesetztem Material eine geeignete Temperaturbehandlung, um beispielsweise ein eingesetztes Lösungsmittel auszutreiben, so dass trockene, zusammenhängende Schichten 13, 14, 15 entstehen. Hierfür reicht, je nach Lösungsmittel, teilweise auch Raumtemperatur aus, wobei sich durch höhere Temperaturen im allgemeinen deutlich bessere Materialeigenschaften erzielen lassen.

Die Figur 1 erläutert einen Dehnungsmessstreifen 10 mit Kontaktflächen 11, die ebenfalls mit Hilfe des erläuterten Ink-Jet-Verfahrens, beispielsweise entsprechend der Herstellung der sensitiven Schicht 15, erzeugt worden sind. Die Figur 2 erläutert den Schichtaufbau des Dehnungsmessstreifens 10 gemäß Figur 1 in dem mäanderförmigen Bereich, wobei erkennbar ist, wie auf dem Substrat 12 zunächst die erste Schicht 13 und darauf bereichsweise die strukturierte, sensitive Schicht 15 erzeugt worden ist, auf die dann schließlich die zweite Schicht 14 abgeschieden wurde.

Das Sensorelement 5 gemäß Figur 1 kann beispielsweise ein Hochdrucksensor in einem Einspritzsystem eines Kraftfahrzeuges sein, ein Sitzkraftsensor in einem Kraftfahrzeug, ein Seitenaufprallsensor in einem Kraftfahrzeug, oder ein Momentensensor für eine Antriebswelle eines Kraftfahrzeuges.

Im Übrigen sei noch darauf hingewiesen, dass es vielfach vorteilhaft ist, wenn das eingesetzte Substrat vor dem Aufbringen der ersten Schicht 13 zunächst einer Vorbehandlung unterzogen wird, die der Reinigung und vor allem der Verbesserung der Benetzbarkeit dient. Derartige Verfahren sind im Stand der Technik bekannt.

## Patentansprüche

1. Verfahren zur Herstellung eines Sensorelementes, insbesondere eines Sensorelementes mit einem Dehnungsmessstreifen, wobei auf ein Substrat (12) zumindest bereichsweise eine erste Schicht (13) und auf die erste Schicht (13) zumindest bereichsweise eine sensitive Schicht (15) aufgebracht wird, wobei die erste Schicht (13) und die sensitive Schicht (15) nacheinander mittels eines Ink-Jet-Verfahrens aufgebracht werden und auf die sensitive Schicht (15) zumindest bereichsweise eine zweite Schicht (14) mittels eines Ink-Jet-Verfahrens aufgebracht wird, **dadurch gekennzeichnet, dass** das Aufbringen der zweiten Schicht (14) derart erfolgt, dass die sensitive Schicht (15) von der ersten Schicht (13) und der zweiten Schicht (14) vollständig umschlossen wird.

2. Verfahren nach Anspruch 1, **dadurch gekennzeichnet, dass** insbesondere unmittelbar nach dem Aufbringen der ersten Schicht (13) eine Wärmebehandlung und/oder eine insbesondere einem Aushärten und/oder einer Vernetzung dienende Beaufschlagung mit elektromagnetischer Strahlung, insbesondere mit Laser-, UV- oder IR-Strahlung, der ersten Schicht (13) erfolgt.

3. Verfahren nach einem der vorangehenden Ansprüche, **dadurch gekennzeichnet, dass** insbesondere unmittelbar nach dem Aufbringen der sensitiven Schicht (15) eine Wärmebehandlung, insbesondere ein zumindest partielles Sintern, und/oder eine insbesondere einem Aushärten und/oder einer Vernetzung dienende Beaufschlagung mit elektromagnetischer Strahlung, insbesondere mit Laser-, UV- oder IR-Strahlung, der sensitiven Schicht (15) erfolgt.

4. Verfahren nach einem der vorangehenden Ansprüche, **dadurch gekennzeichnet, dass** insbesondere unmittelbar nach dem Aufbringen der zweiten Schicht (14) eine Wärmebehandlung und/oder eine insbesondere einem Aushärten und/oder einer Vernetzung dienende Beaufschlagung mit elektromagnetischer Strahlung, insbesondere mit Laser-, UV- oder IR-Strahlung, der zweiten Schicht (14) erfolgt.

5. Verfahren nach einem der vorangehenden Ansprüche, **dadurch gekennzeichnet, dass** als erste Schicht (13) eine elektrisch isolierende Schicht, insbesondere eine keramische Schicht, eine organische Schicht wie eine Acrylat-Schicht, oder eine Ormocer-Schicht, aufgebracht wird, wobei in einem ersten Schritt eine Lösung oder Suspension auf das Substrat (12) aufgespritzt wird, die in einem zweiten Schritt in die erste Schicht (13) überführt wird.

6. Verfahren nach einem der vorangehenden Ansprüche, **dadurch gekennzeichnet, dass** als sensitive Schicht (15) eine metallische Schicht, insbesondere eine im Wesentlichen aus einem Edelmetall wie Au oder Ag bestehende Schicht, oder eine mit leitfähigen Partikeln gefüllte Polymerschicht aufgebracht wird, wobei in einem ersten Schritt eine Lösung oder Suspension auf die erste Schicht (13) aufgespritzt wird, die in einem zweiten Schritt in die sensitive Schicht (15) überführt wird.

7. Verfahren nach Anspruch 6, **dadurch gekennzeichnet, dass** in dem ersten Schritt eine Suspension nanoskaliger metallischer Partikel aufgebracht wird, die in dem zweiten Schritt insbesondere durch die Wärmebehandlung in die metallische sensitive Schicht (15) überführt wird.

8. Verfahren nach einem der vorangehenden Ansprüche, **dadurch gekennzeichnet, dass** als zweite Schicht (14) eine die sensitive Schicht (15) passivierende und/oder vor Eindiffusion von Fremdstoffen schützende Schicht aufgebracht wird.

9. Verfahren nach einem der vorangehenden Ansprüche, **dadurch gekennzeichnet, dass** im Rahmen des Ink-Jet-Verfahrens eine Lösung oder Suspension mittels eines Piezo- oder Thermoaktors durch eine Düse mit einer Öffnung mit einem Durchmesser von 3 µm bis 100 µm, insbesondere 5 µm bis 50 µm, aufgespritzt wird.

10. Verfahren nach einem der vorangehenden Ansprüche, **dadurch gekennzeichnet, dass** die sensitive Schicht (15) zumindest bereichsweise mikrostrukturiert, insbesondere mäanderförmig mikrostrukturiert, auf die erste Schicht (13) aufgebracht wird.

11. Verwendung des Verfahrens nach einem der vorangehenden Ansprüche zur Herstellung eines Sensorelementes mit einem Dehnungsmessstreifen (10) zur Erfassung von physikalischen Größen wie Kraft, Moment oder Druck, insbesondere eines Hochdrucksensors in einem Einspritzsystem eines Kraftfahrzeuges, eines Sitzkraftsensors, eines Seitenaufprallsensors oder eines Momentensensors für eine Antriebswelle.

## Claims

1. Method for manufacturing a sensor element, in particular a sensor element having a strain gauge, a first layer (13) being applied at least in regions onto a substrate (12) and a sensitive layer (15) being applied at least in regions onto the first layer (13), the first layer (13) and the sensitive layer (15) being applied one after another by means of an inkjet process, and a second layer (14) being applied at least in regions onto the sensitive layer (15) by means of an inkjet process, **characterized in that** the second layer (14) is applied in such a way that the sensitive layer (15) is enclosed completely by the first layer (13) and the second layer (14).

2. Method according to Claim 1, **characterized in that** a thermal treatment and/or an application, which serves, in particular, for curing and/or for crosslinking, of electromagnetic radiation to the first layer (13), in particular with laser, UV or IR radiation, are/is carried out, in particular, directly after the application of the first layer (13).

3. Method according to one of the preceding claims, **characterized in that** a thermal treatment, in particular at least partial sintering, and/or an application, which serves, in particular, for curing and/or for crosslinking, of electromagnetic radiation to the sensitive layer (15), in particular with laser, UV or IR radiation, are/is carried out, in particular, directly after the application of the sensitive layer (15).

4. Method according to one of the preceding claims, **characterized in that** a thermal treatment and/or an application, which serves, in particular, for curing and/or for crosslinking, of electromagnetic radiation to the second layer (14), in particular with laser, UV or IR radiation, are/is carried out, in particular, directly after the application of the second layer (14).

5. Method according to one of the preceding claims, **characterized in that** an electrically insulating layer, in particular a ceramic layer, an organic layer such as an acrylate layer, or an Ormocer layer, is applied as first layer (13), a solution or suspension being sprayed onto the substrate (12) in a first step, which solution or suspension is converted into the first layer (13) in a second step.

6. Method according to one of the preceding claims, **characterized in that** a metallic layer, in particular a layer which consists substantially of a precious metal such as Au or Ag, or a polymer layer which is filled with conductive particles, is applied as sensitive layer (15), a solution or suspension being sprayed onto the first layer (13) in a first step, which solution or suspension is converted into the sensitive layer (15) in a second step.

7. Method according to Claim 6, **characterized in that** a suspension of nanoscale metallic particles is applied in the first step, which suspension is converted in the second step into the metallic sensitive layer (15), in particular by the thermal treatment.

8. Method according to one of the preceding claims, **characterized in that** a layer which passivates the sensitive layer (15) and/or protects it from impurities diffusing in is applied as second layer (14).

9. Method according to one of the preceding claims, **characterized in that**, within the inkjet process, a solution or suspension is sprayed on by means of a piezoactuator or thermoactuator through a nozzle having an opening with a diameter of from 3 µm to 100 µm, in particular from 5 µm to 50 µm.

10. Method according to one of the preceding claims, **characterized in that** the sensitive layer (15) is applied onto the first layer (13) at least in regions in a microstructured manner, in particular in a meandering microstructured manner.

11. Use of the method according to one of the preceding claims for manufacturing a sensor element having a strain gauge (10) for sensing physical variables such as force, moment or pressure, in particular a high-pressure sensor in an injection system of a motor vehicle, a seat force sensor, a lateral impact sensor or a moment sensor of a drive shaft.

## Revendications

1. Procédé de fabrication d'un élément capteur, en particulier d'un élément capteur muni d'une jauge extensiométrique, selon lequel on dispose une première couche (13) au moins un substrat (12) et une couche sensitive (15) sur la première couche (13), au moins par zone, la première couche (13) et la couche sensitive (15) étant déposées successivement au moyen d'un procédé à jet d'encre alors que sur la couche sensitive (15) on dépose au moins par zones une deuxième couche (14) au moyen d'un procédé à jet d'encre,
**caractérisé en ce que**
le dépôt de la deuxième couche (14) s'effectue de telle sorte que la couche sensitive (15) soit complètement enveloppée par la première couche (13) et la deuxième couche (14).

2. Procédé selon la revendication 1,
**caractérisé en ce qu'**
en particulier immédiatement après le dépôt de la première couche (13) on réalise un traitement thermique et/ou en particulier un durcissement et/ou une sollicitation par rayonnement électromagnétique servant à une réticulation, en particulier par rayonnement laser, UV ou IR, de la première couche (13).

3. Procédé selon l'une quelconque des revendications précédentes,
**caractérisé en ce qu'**
en particulier immédiatement après le dépôt de la couche sensitive (15), on réalise un traitement thermique, en particulier au moins un frittage partiel et/ou une sollicitation par rayonnement électromagnétique servant en particulier au durcissement et/ou à la réticulation, en particulier un rayonnement laser, UV ou IR, de la couche sensitive (15).

4. Procédé selon l'une quelconque des revendications précédentes,
**caractérisé en ce qu'**
en particulier immédiatement après le dépôt de la deuxième couche (14), on réalise un traitement thermique et/ou une sollicitation par rayonnement électromagnétique servant en particulier à un durcissement et/ ou une réticulation, en particulier un rayonnement laser, UV ou IR, de la deuxième couche (14).

5. Procédé selon l'une quelconque des revendications précédentes,
**caractérisé en ce que**
comme première couche (13), on dépose une couche isolante électriquement, en particulier une couche céramique, une couche organique telle qu'une couche d'acrylate, ou un couche d'ormocère, et dans une première étape on projette sur le substrat (12) une solution ou une suspension qui dans une deuxième étape est transférée dans la première couche (13).

6. Procédé selon l'une quelconque des revendications précédentes,
**caractérisé en ce que**
comme couche sensitive (15), on dépose une couche métallique, en particulier une couche essentiellement en un métal noble tel que Au ou Ag, ou une couche polymère chargée de particules conductrices, et dans une première étape on projette sur la première couche (13) une solution ou une suspension qui, dans une deuxième étape, est transférée dans la couche sensitive (15).

7. Procédé selon la revendication 6,
**caractérisé en ce que**
dans la première étape, on dépose une suspension de particules métalliques à l'échelle nano qui, dans la deuxième étape, est transférée dans la couche métallique sensitive (15) en particulier par le traitement thermique.

8. Procédé selon l'une quelconque des revendications précédentes,
**caractérisé en ce que**
comme deuxième couche (14), on dépose une couche passivant et/ou protégeant la couche sensitive (15) contre la pénétration de matières étrangères.

9. Procédé selon l'une quelconque des revendications précédentes,
**caractérisé en ce que**
dans le cadre du procédé à jet d'encre, une solution ou une suspension est projetée au moyen d'un actionneur piézoélectrique ou thermique par une buse munie d'une ouverture d'un diamètre entre 3 µm et 100 µm, en particulier entre 5 µm et 50 µm.

10. Procédé selon l'une quelconque des revendications précédentes,
**caractérisé en ce que**
la couche sensitive (15) est déposée au moins en partie de façon micro-structurée, en particulier micro-structurée en forme de méandre, sur la première couche (13).

11. Utilisation du procédé selon l'une quelconque des revendications précédentes, pour la fabrication d'un élément capteur muni d'une jauge extensiométrique (10) pour détecter des grandeurs physiques telles que la force, le couple ou la pression, en particulier d'un capteur haute pression dans un système d'injection d'un véhicule automobile, d'un capteur de force de siège, d'un capteur d'impact latéral ou d'un capteur de couple pour un arbre d'entraînement.
